# EUROPEAN PATENT SPECIFICATION

(11) **EP 1 716 969 B1**
(45) Date of publication and mention of the grant of the patent: **08.10.2008**
(21) Application number: 06007986.0
(22) Date of filing: 18.04.2006
(51) Int. Cl.: B23Q 11/00, F16F 15/02, G05D 19/02

(54) **Method for active vibration suppression in a machine tool**
Verfahren zur aktiven Schwingungsdämpfung in einer Werkzeugmaschine
Méthode de suppression active des vibrations dans une machine-outil

(30) Priority: 28.04.2005 JP 2005131790
(43) Date of publication of application: 02.11.2006
(73) Proprietor: OKUMA CORPORATION, Niwa-gun Aichi (JP)
(72) Inventor: Furuhashi, Seiji, Niwa-gun, Aichi (JP); Takenaka, Koji, Niwa-gun, Aichi (JP); Kamada, Tokio, Niwa-gun, Aichi (JP)
(74) Representative: Neugebauer, Jürgen

(56) References cited:
- EP-A- 0 309 211
- DE-A1- 4 412 945
- US-A1- 2005 081 728
- US-B1- 6 401 620
- PATENT ABSTRACTS OF JAPAN vol. 016, no. 203 (M-1247), 14 May 1992 (1992-05-14) & JP 04 030938 A (MITSUBISHI HEAVY IND LTD), 3 February 1992 (1992-02-03)

## Description

### BACKGROUND OF THE INVENTION

### Field of the invention

The present invention relates to a method for controlling a machine tool that compulsory suppresses its vibration.

### Description of the related art

Conventionally, during operation of a machine tool, it is known that vibration is generated in moving a workpiece or a tool, or in cutting the workpiece. It is also known that the vibration is transmitted to the tool and affects machining accuracy and a grade of a processed surface. On the other hand, a machine tool is required to achieve precise machining accuracy. To fulfill this requirement, the machining tool is designed to have various measures, such as selection of materials for components of the machine and upgrade of rigidity of the attachment portion of each component.

Moreover, as a measure against vibration, Japan Published Unexamined Patent Application No. 4-30938 is well known. This document discloses that a sensor for detecting vibration is provided with a column so that excitation is performed by a vibrator that applies vibration that is in opposite phase from the detected vibration. The purpose of this technology is to prevent cutting accuracy deterioration by resonance which is caused when vibration generated at the cutting point during cutting corresponds to the natural frequency of a machine tool.

Recently, in order to achieve efficient machining, there has been a strong requirement to improve tool-up speed of a machine tool moving body that supports a workpiece or a tool, for example, a spindle head, a table, a column, across rail of a double-column machining center, a headstock of a lathe, and a tool rest. To deal with this requirement, feed speed or adjustable speed of the moving body has been accelerated. In addition, upgrade of rigidity of a machine tool main body that is subject to reaction of the moving body by acceleration of the adjustable speed of the moving body as well as weight reduction of the moving body have been promoted. At the same time, desire to precise machining accuracy or an excellent grade of a processed surface is also strong, and to deal with this desire, improvement of a grade of the processed surface has been considered by upgrading rigidity of the machine tool.

Conventionally, in upgrading rigidity of the machine tool main body or weight reduction of the moving body, at first, accelerating the adjustable speed more than the planned one causes insufficiency of rigidity of the machine tool main body, thereby generating vibration at a tool mounted on the main spindle of the machine tool. Consequently, procedure for upgrading rigidity of the machine tool main body is required every when adjustable speed is accelerated. Failure to this upgrade of rigidity of the machine tool main body allows vibration to remain at the tool portion, so that a grade of a processed surface might be deteriorated or extra time is required to wait until vibration is damped in order to prevent deterioration of the grade, which is a factor to inhibit the excellent machining accuracy. Moreover, rigidity of the machine tool could lead to enlargement of the machine or reduction of cutting area, which fails to fulfill demands of the market, for example, demands for minimization of installment area of the machine, and demands for enlargement of cutting area. To upgrade rigidity, in view of this, it is necessary to have a complicated machine structure, additional maintenance time, and an expensive machine tool, which are problematic.

In a machine tool disclosed in Japan Published Unexamined Patent Application No. 4-30938, excitation is performed after generated vibration is detected. With this mechanism, vibration in heavy cut can be detected where vibration at the machining point is large, however, vibration in finish machining in accordance with feeding cannot be detected, resulting that vibration cannot be suppressed by excitation.

Moreover, although desire for accelerating speed is often required to achieve precise machining accuracy or an excellent grade of a processed surface in finish processing of a mold surface, in technology of Japan Published Unexamined Patent Application No. 4-30938 at least initial vibration can not be suppressed even if detecting vibration is possible, for example. This causes the machining point to be deviated because of displacement of a main spindle occurred by vibration, and as a result, irregularity occurs on the processed surface, which makes it impossible to obtain a predetermined accuracy and grade of the processed surface.

EP-0309211-A discloses a method according to the preamble of claim 1.

The present invention is to solve the above problems and aims to providing a method for controlling a machine tool capable of suppressing vibration caused by a feed shaft that moves in a rapid speed in every condition.

### SUMMARY OF THE INVENTION

The above mentioned problem is solved by a method for controlling a machine tool with a vibration suppression means according to claim 1.
The dependent claims relate to advantageous embodiments.

In the present invention, a vibration suppression means is provided with a machine tool, whereby damping time of vibration at a tool portion is shortened when the vibration suppression means adds vibration that is in opposite phase from the vibration generated on the main body of the machine tool, or vibration on the main body of the machine tool is isolated so that vibration on the main spindle is not generated when the vibration suppression means adds vibration that is in opposite phase from the vibration generated on the main body of the machine tool. Consequently, it is possible to shorten or eliminate time for waiting vibration damping on the tool portion. Moreover, degrading of a processed surface in accordance with vibration of the tool portion does not occur. In addition, device for upgrading rigidity to be conducted every when adjusting speed is accelerated is not necessary.

Moreover, since providing only a vibration suppression means that is necessary to suppress or isolate vibration of the machine tool with the current rigidity is sufficient, it is possible to suppress or isolate vibration by adding a vibration suppression means to an existing machine tool. As a result, a grade of a processed surface can be improved.

Moreover, since a complicated mechanism is not required in a machine tool, additional time for assembly or maintenance is unnecessary. Moreover, mounting area enlargement by upgrading rigidity, and reduction of cutting area are prevented.

According to invention recited in claim 1 or 2, since a vibration suppression controlling means that controls a vibration suppression means based on a previously stored vibration waveform is provided, it is possible to operate the vibration suppression means to suppress or isolate vibration from when the initial vibration is generated. As a result, a processed surface is free from irregularity, so that a predetermined accuracy is obtained and a grade of the processed surface can be improved.

According to invention recited in claim 3, since the vibration suppression means is provided on the upper part of a component that constitutes the main body of the machine tool, it is possible to effectively suppress or isolate vibration with a compact-sized vibration suppression means. Since the vibration suppression means can be compact-sized, application to an existing machine tool becomes easier, which is effective.

### BRIEF DESCRIPTION OF THE DRAWINGS

Fig. 1 is a perspective view of a double-column machining center used in a method according to the present invention.
Fig. 2 is a block diagram showing a control circuit used in a method according to the present invention.
Fig. 3 is a perspective view of a double-column machining center when it previously detects vibration, used in a method according to the present invention.

### DETAILED DESCRIPTION OF THE PREFERRED EMBODIMENT

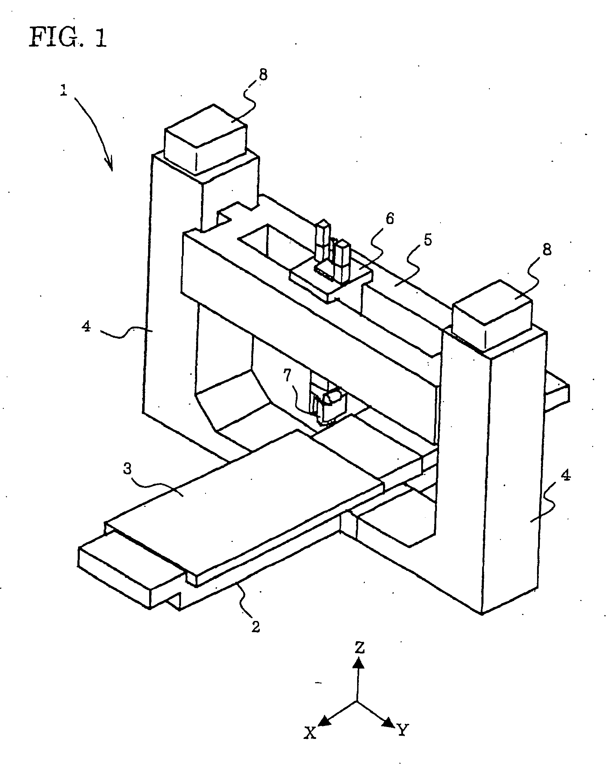

Fig. 1 shows a mechanical structure of a double-column machining center as an example of a machine tool used in the method according to the present invention. In a double-column machining center 1, columns 4, 4 as a structure are erected on the lateral sides of a bed 2 (in the Y-axis direction) that maintain a table 3 as a moving body movably in the forward and backward direction (in the X-axis direction). Guides (not shown) are formed on the opposing sides of the columns 4, 4, and a cross rail 5 as a moving body is bridged so as to be slid and positioned on the guides in the vertical direction (in the Z-axis direction). A spindle head 6 as a moving body that is movable in the right and left direction (in the Y-axis direction) is provided on the cross rail 5. On the spindle head 6, a main spindle 7 is attached movable in the vertical direction (in the Z-axis direction). The above explanation is the same as that of a conventional machining center where a machine tool main body consists of components, such as a bed, a table, a column, a cross rail, and a spindle head.

The double-column machining center 1 has a vibration suppression means 8. Actually it is preferable that the vibration suppression means 8 suppresses vibration at a place adjacent to a moving body so as not to transfer vibration to other components. In such a case, vibration caused by an object whose weight is substantially same as that of the moving body is required. However, among machining tools, in particular in a relatively large machining center such as a double-column machining center, only a table has weight of several tons, and total weight including a workpiece disposed on a table will be several dozen of tons, whereby it is practically impossible to mount an object that has the same weight as the above total weight for vibration suppression.

Generally in a machine tool, a relatively heavy moving body is moved in the horizontal direction, whereas a relatively light moving body is moved in the vertical direction. For example, in a double-column machining center in Fig. 1, a configuration is adopted where a table is directly disposed on a bed fixed on the ground.

Because of the above, it is preferable to provide a vibration suppression means at a place remote from an object, generally a place remote from the ground. For this reason, in a method according to the present invention the vibration suppression means is disposed at the top portion of the column. It should be noted that as a vibration suppression means, a commercially available vibration suppression device is available, such as "ω2" manufactured by Tokkyokiki Corporation, and moreover, other similar devices are available in accordance with vibration applied on the machine.

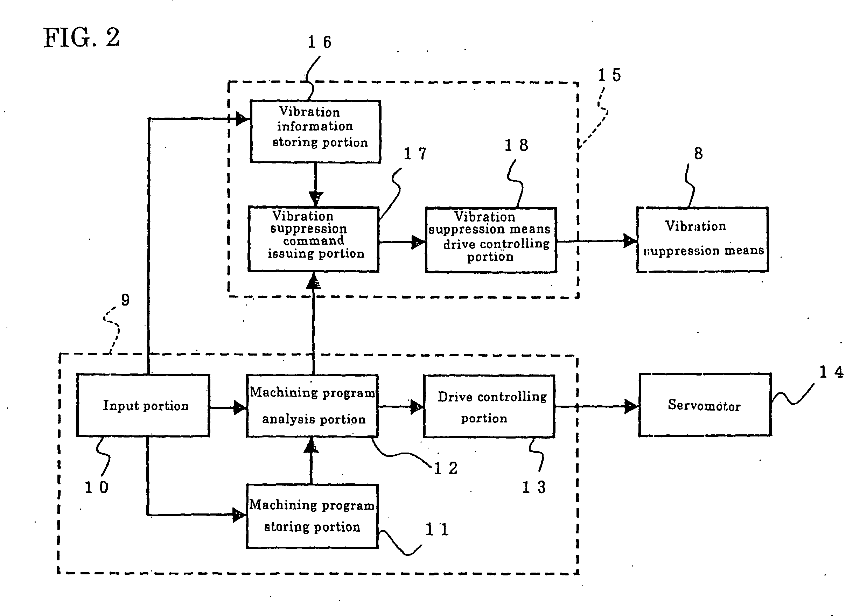

Fig. 2 is a block diagram showing a control circuit of a machine tool used in a method according to the present invention. In Fig. 2, the reference number 9 denotes a conventional numerical value controlling means that constitutes a part of a numerical value controlling device. The numerical value controlling means 9 includes an input portion 10 that inputs information such as a machining program from outside, a machining program storing portion 11 that stores the machining program input by the input portion 10, a machining program analysis portion 12 that analyzes the machining program based on a command input by the input portion 10, and a drive controlling portion 13 that controls a servomotor 14 of a driving axis of the machine tool and so on based on the machining program analyzed by the machining program analysis portion 12.

The reference numeral 15 is a vibration suppression controlling means that includes:
a vibration information storing portion 16 that stores vibration information that is input by the input portion 10 and that corresponds to a feed speed of the machine tool; a vibration suppression command issuing portion 17 that reads vibration information stored in the vibration information storing portion 16 based on a moving command for the moving body that is output from the machining program analysis portion 12 and issues a drive command for driving the vibration suppression means 8, and
a vibration suppression means drive controlling portion 18 that drives the vibration suppression means 8 based on the command from the vibration suppression command issuing portion 17.

### [Embodiment]

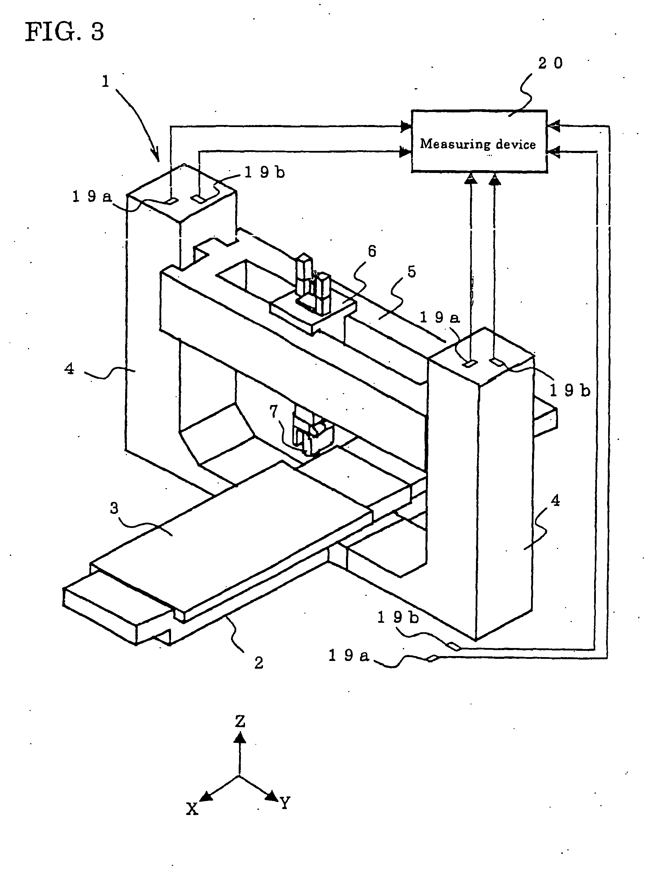

In embodying the present invention, it is required to previously measure vibration information that is generated during movement of the moving body of the machining tool. For this reason, as shown in Fig. 3, detectors 19a, 19b that detect vibration are previously mounted on a double-column machining center 1. Moreover, on a table 3, an object having a predetermined weight that would be replaced with a workpiece afterward is disposed. The table 3 is moved with several conditions, for example, a table feed speed is increased to the maximum value by an interval of 5m/min. Then, vibration information such as a vibration waveform that is generated during movement of the table 3 is previously measured.

Here, the detectors are preferably disposed at a mounting portion of the vibration suppression means or adjacent thereof. In particular, a detector 19a that detects vibration in the X-axis direction and a detector 19b that detects vibration in the Y-axis direction are disposed respectively. Although driving a feed shaft might generate vibration as the moving body becomes heavier, a relatively light object is moved in the vertical direction as described above and influences from vibration in the vertical direction are negligible. Consequently, measuring and suppressing vibration in the X- and Y-axis direction would be most efficient from the viewpoint of cost-effectiveness. Needless to say, in order to suppress vertical vibration, it is possible to provide a vibration suppression device or a detector for the vertical direction in measuring a condition to drive the vibration suppression device.

In addition, depending on a fixing condition of a bed on the ground, the double-column machining center 1 might be vibrating with respect to the ground. For this reason, here, detectors 19a, 19b are also disposed on the ground adjacent to the double-column machining center. These detectors may be omitted depending on a fixing condition of a bed on the ground or required vibration suppression faculty.

In this way, with the detectors mounted, a table 3 of the machining center 1, a spindle head 6, and so on are fed at a various speed, and vibration generated at each feed speed is detected with the detector 19a, 19b to be stored in a measuring device 20. The stored vibration waveform is input into the vibration suppression controlling means 15 by the input portion 10 and stored in the vibration information storing portion 16.

Next, operation of the present invention will be explained. In the double-column machining center 1, when an operation command for machining is issued, based on the commanded machining program, a machining program analysis portion 12 transmits a control signal to the drive controlling portion 13 and the vibration suppression command issuing portion 17. The drive controlling portion 13 converts the control signal into a supply current for a servomotor 14, and the electric power is supplied.

On the other hand, the vibration suppression command issuing portion 17 reads, from the vibration information storing portion 16, vibration information which is corresponding to a feed speed command value of the machine tool that is input from the machining program analysis portion 12. Then, the vibration suppression command issuing portion 17 transmits the control signal to the vibration suppression means drive controlling portion 18. Here, if the commanded feed speed is not identical to that of the measured condition, the feed speed can be determined from the measured conditions similar to the operating condition. For example, when the feed speed of the measured condition is determined by an interval of 5m/min and the commanded feed speed in machining is 12m/min, the appropriate feed speed can be obtained by interpolation from the vibration information between the feed speed of 10m/min and 15m/min. In the vibration suppression means drive controlling portion 18, the vibration suppression means 8 is controlled based on the control signal.

As described above, it is possible to add vibration being in opposite phase from vibration generated on the main body of the machine tool, which makes it possible to shorten or eliminate the vibration damping time.

In the above embodiment, in measuring vibration information, a variation of feed speed of the table is exemplary explained. However, various components can be modified as follows: an object weight that is disposed on the table can be changed in consideration of modification of a workpiece, a program, and a jig; an acceleration value can be changed; a cross rail position in the vertical direction, a spindle head position in the right and left direction, and a main spindle position in the vertical direction can be changed, and a tool attached to the main spindle or an attachment can be changed; if there is a clamping or braking means disposed at each component, its activation or inactivation can be switched, and if the machine tool has an absolute value detector in a control system of a motor for driving a moving body, its activation or inactivation can be switched.

With the above-described modification, various conditions can be modified in a phased manner in measuring vibration information, and it is preferable to store the information on the modified conditions as well as a motor current value in each condition.

Moreover, although it is required that vibration measured and stored previously and vibration generated by the vibration suppression means should be in opposite phase, it is acceptable that the vibration information storing portion 16 previously stores converted vibration information being in opposite phase from the value detected by the detector 19a, 19b. Alternatively, the vibration suppression command issuing portion 17 or the vibration suppression means drive controlling portion 18 can perform conversion into an opposite phase vibration.

In addition, information input from the machining program analysis portion 12 to the vibration suppression command issuing portion 17 may be a command value such as an acceleration value or a torque, other than a feed speed command value on the program. Alternatively, information in accordance with a current supplied to the servomotor can also be available, as long as information is in a form corresponding to condition stored with vibration information at the time of measuring. When information in accordance with a current supplied to the servomotor is input, information can be input from the drive controlling portion 13 instead of the machining program analysis portion 12. Moreover, the present invention can be applied to not only the table 3, but also other moving bodies of the machine tool, a lateral movement of the spindle head, for example. Needless to say, several modifications that come within the scope of the present invention are acceptable.

## Claims

1. A method for controlling a machine tool with a vibration suppression means (8), wherein said machine tool is driven based on a machining program and said machine tool comprises:
a vibration suppression means (8) provided with a main body of the machine tool, and
a vibration suppression controlling means (15) for controlling the vibration suppression means (8) based on previously stored vibration waveforms,
**characterized in that** said previously stored waveforms have been determined prior to a machining performed on a work piece based on an object to be later replaced by the work piece and based on several operating conditions, and wherein during a machining performed on a workpiece, vibration waveforms determined under operating conditions similar to conditions of the machining based on the machining program are employed among said previously stored waveforms and interpolated.

2. A method according to claim 1, **characterized in that** the vibration suppression controlling means (15) comprises:
a vibration information storing portion (16) for storing vibration information generated on the main body of the machine tool when a moving body (3, 5, 6) of the machine tool is moved;
a vibration suppression command issuing portion (17) for issuing a control signal command of vibration in opposite phase from the vibration generated on the machine tool after reading vibration information from the vibration information storing portion (16) based on the moving command for the moving body (3, 5, 6) that is read during operation of the machine tool, the information being in accordance with vibration generated on the machine tool by the moving command, and
a vibration suppression means drive controlling portion (18) for driving the vibration suppression means (8) based on the command from the vibration suppression command issuing portion.

3. A method according to claim 1 or 2, **characterized in that** the vibration suppression means (8) is provided on the upper part of a component that constitutes the main body of the machine tool.

## Patentansprüche

1. Verfahren zum Steuern einer Werkzeugmaschine mit Vibrationsunterdrückungsmitteln (8), wobei die Werkzeugmaschine angetrieben wird basierend auf einem Programm zur maschinellen Bearbeitung und wobei die Werkzeugmaschine umfasst:
Vibrationsunterdrückungsmittel (8), die mit einem Hauptkörper der Werkzeugmaschine bereitgestellt werden, und
Vibrationsunterdrückungs-Steuerungsmittel (15) zum Steuern der Vibrationsunterdrückungsmittel (8), basierend auf vorab gespeicherten Vibrationswellenformen, **dadurch gekennzeichnet, dass** vorab gespeicherte Wellenformen vor der Durchführung einer maschinellen Bearbeitung an einem zu bearbeitenden Werkstück ermittelt worden sind, basierend auf einem Gegenstand, der später durch das zu bearbeitende Werkstück zu ersetzen ist und basierend auf unterschiedlichen Betriebsbedingungen, und wobei während eines an einem zu bearbeitenden Werkstück durchgeführten maschinellen Bearbeitungsgangs Vibrationswellenformen erfasst worden sind unter Betriebsbedingungen, die ähnlich sind zu den Bedingungen während des maschinellen Bearbeitungsvorgangs, basierend auf dem Programm zur maschinellen Bearbeitung und welche auf Grundlage der vorab gespeicherten Wellenformen angewendet und interpoliert werden.

2. Verfahren gemäß Anspruch 1, **dadurch gekennzeichnet, dass** die Steuerungsmittel (15) zur Vibrationsunterdrückung umfassen:
einen Speicherteil (16) für Vibrationsinformationen zum Speichern von Vibrationsinformationen, die auf dem Hauptkörper der Werkzeugmaschine erzeugt worden sind, wenn ein sich bewegender Körper (3, 5, 6) der Werkzeugmaschine bewegt wird;
einen Ausgabeteil (17) für Vibrationsunterdrückungs-Befehle zum Ausgeben eines Steuerungssignalbefehls für Vibrationen mit entgegengesetzter Phase zu der Vibration, die auf der Werkzeugmaschine nach dem Lesen der Vibrationsinformation aus dem Speicherteil (16) für Vibrationsinformationen erzeugt wird, basierend auf dem Befehl zum Bewegen des sich bewegenden Körpers (3, 5, 6), welcher während der Bedienung der Werkzeugmaschine ausgelesen wird, wobei die Information in Übereinstimmung mit Vibrationen ist, die auf der Werkzeugmaschine durch den Befehl zum Bewegen erzeugt werden, und wobei die Vibrationsunterdrückungsmittel einen Steuerteil (18) zum Antreiben der Vibrationsunterdrückungsmittel (8) basierend auf dem Befehl vom Ausgabeteil für den Befehl zur Vibrationsunterdrückung antreiben.

3. Verfahren nach Anspruch 1 oder 2, **dadurch gekennzeichnet, dass** die Vibrationsunterdrückungsmittel (8) auf dem oberen Teil eines Bauteils bereitgestellt werden, welcher den Hauptkörper der Werkzeugmaschine bildet.

## Revendications

1. Procédé pour commander une machine-outil avec un moyen de suppression des vibrations (8), dans lequel ladite machine-outil est entraînée sur la base d'un programme d'usinage et ladite machine-outil comprend :
un moyen de suppression des vibrations (8) prévu avec un corps principal de la machine-outil,
et
un moyen de commande de la suppression des vibrations (15) pour commander le moyen de suppression des vibrations (8) sur la base de formes d'onde de vibration stockées préalablement, **caractérisé en ce que** lesdites formes d'onde stockées préalablement ont été déterminées avant un usinage réalisé sur une pièce à usiner sur la base d'un objet qui plus tard doit être remplacé par la pièce à usiner et sur la base de plusieurs conditions opérationnelles, et dans lequel, pendant un usinage réalisé sur une pièce à usiner, des formes d'ondes de vibration déterminées dans des conditions opérationnelles semblables à des conditions de l'usinage sur la base du programme d'usinage sont employées parmi lesdites formes d'ondes stockées préalablement et interpolées.

2. Procédé selon la revendication 1, **caractérisé en ce que** le moyen de commande de la suppression des vibrations (15) comporte :
une partie de stockage de l'information sur les vibrations (16) pour stocker l'information de vibration générée sur le corps principal de la machine-outil lorsqu'un corps en mouvement (3, 5, 6) de la machine-outil est déplacé ;
une partie d'émission de la commande de suppression des vibrations (17) pour émettre un ordre de signal de commande de vibration dans la phase opposée à la vibration générée sur la machine-outil après la lecture de l'information de vibration provenant de la partie de stockage de l'information sur les vibrations (16) sur la base de l'ordre de mouvement pour le corps en mouvement (3, 5, 6) qui est lu pendant l'opération de la machine-outil, l'information étant conforme à la vibration générée sur la machine-outil par l'ordre de mouvement, et
une partie de commande de l'entraînement du moyen de suppression des vibrations (18) pour entraîner le moyen de suppression des vibrations (8) sur la base de l'ordre provenant de la partie émettant l'ordre de suppression des vibrations.

3. Procédé selon la revendication 1 ou 2, **caractérisé en ce que** le moyen de suppression des vibrations (8) est prévu sur la partie supérieure d'un composant qui constitue le corps principal de la machine-outil.
